Europäisches Patentamt

European Patent Office

Office européen des brevets

(19)

(11) Veröffentlichungsnummer: **0 233 137
B1**

## (12) EUROPÄISCHE PATENTSCHRIFT

(45) Veröffentlichungstag der Patentschrift:
16.05.90

(21) Anmeldenummer: 87730001.2

(22) Anmeldetag: 09.01.87

(51) Int. Cl.⁵: **B23K 11/00**

(54) Vorrichtung zum Pressschweissen paketierter Metallfolien.

(30) Priorität: 13.02.86 DE 3604782

(43) Veröffentlichungstag der Anmeldung:
19.08.87 Patentblatt 87/34

(45) Bekanntmachung des Hinweises auf die Patenterteilung:
16.05.90 Patentblatt 90/20

(84) Benannte Vertragsstaaten:
DE FR GB IT SE

(56) Entgegenhaltungen:
DE-A- 1 933 576
FR-A- 2 246 349
GB-A- 210 130
US-A- 4 493 964

PATENT ABSTRACTS OF JAPAN, Band 7,
Nr. 199 (M-240)[1344], 3. September 1983; &
JP-A-58 97 485 (HITACHI SEISAKUSHO K.K.) 09-06-1983

(73) Patentinhaber: Siemens Aktiengesellschaft,
Wittelsbacherplatz 2, D-8000 München 2(DE)

(72) Erfinder: von Skarczinski, Albrecht, Mertensstrasse 43,
D-1000 Berlin 20(DE)

ACTORUM AG

## Beschreibung

Die Erfindung betrifft ein Verfahren zur örtlichen Verbindung paketierter streifenförmiger Metallfolien durch elektrisches Preßschweißen an beiden Enden des Folienpaketes, mit Schweißelektroden zur Hindurchleitung eines Schweißstromes durch den zu verbindenden Bereich des Folienpaketes sowie mit einer Einrichtung zur Wärmeabfuhr aus dem Folienpaket.

Nach einem solchen Verfahren hergestellte biegsame Strombänder werden insbesondere in der Elektrotechnik häufig dort eingesetzt, wo relativ zueinander bewegbare Teile elektrisch miteinander verbunden sein sollen. Anwendungsgebiete solcher Strombänder sind daher vor allem alle Arten von Starkstromschaltgeräten und Schaltanlagen. Durch das Preßschweißen werden die Metallfolien mechanisch und elektrisch leitend miteinander verbunden, so daß bei der Herstellung einer Klemmverbindung sichergestellt ist, daß sich der zu übertragende Strom gleichmäßig auf alle Metallfolien verteilt.

Als Werkstoffe zur Herstellung derartiger Strombänder aus Metallfolien kommen insbesondere die in der Elektrotechnik allgemein verwendeten Leiterwerkstoffe Kupfer oder Aluminium in Frage. Mit Rücksicht darauf, daß die Beweglichkeit der miteinander zu verbindenden Teile möglichst wenig behindert sein soll, ist es erforderlich, federnde Metallfolien zu verwenden. Dabei besteht die Schwierigkeit, daß sowohl Aluminium als auch Kupfer von Natur aus nur eine ungenügende Federungseigenschaft besitzen und es daher erforderlich ist, die Folien einer Walzbehandlung zu unterziehen, um dem Werkstoff eine ausreichende Federhärte zu verleihen. Werden die Folien jedoch einer oberhalb der Rekristallisationstemperatur liegenden Temperatur ausgesetzt, so verlieren sie die Federung. Um diesen Einfluß bei der Herstellung von Strombändern aus Folienpaketen soweit wie möglich zu verhindern, hat man bisher das Preßschweißen in einem Wasserbad vorgenommen, da hierdurch der Wärmeeinfluß des Preßschweißens im wesentlichen auf die Druckflächen der Schweißelektroden beschränkt bleibt.

Es ist bereits bekannt, zum Verschweißen von Folienpaketen diese zwischen relativ zueinander bewegbare Schweißelektroden einzubringen und mittels eines Stromes geeigneter Hohe auf eine unterhalb der Schmelztemperatur, jedoch für die dauerhafte Verbindung ausreichende Temperatur zu erhitzen. Anschließend wird das Folienpaket entweder unmittelbar anschließend an den Schweißvorgang in Wasser abgekühlt oder erst, nachdem an freier Luft eine gewisse Grenztemperatur erreicht ist (US-A 4 493 964).

Bei einem Flammenschweißverfahren ist es bereits bekannt, anstelle eines Wasserbades eine indirekte Kühlung anzuwenden. Hierzu wird ein flüssiges Kühlmittel durch Hohlräume in Haltebacken geleitet, zwischen denen die miteinander zu verschweißenden Teile eingespannt werden (GB-A 210 130).

Eine wirtschaftliche Herstellung von Strombändern wird gemäß der Erfindung ausgehend von dem bekannten Widerstands-Schweißverfahren durch die nachstehenden, aufgrund einer Ablaufsteuerung nacheinander erfolgenden Schritte erreicht:

a) Aufnahme eines bereitgestellten Folienpaketes zwischen Haltebacken mit beidseitigem Überstand der Enden des Folienpaketes;

b) Überführung der Haltebacken in eine nahe bei den Schweißelektroden vorgesehene Bereitschaftsstellung;

c) Überführung der Haltebacken aus der Bereitschaftsstellung in eine Arbeitsstellung, in der das eine Ende des Folienpaketes zwischen die Schweißelektroden ragt;

d) Anlegen der Schweißelektroden an das eine Ende des Folienpaketes, Hindurchleitung eines Schweißstromes durch das Folienpaket und Beaufschlagung der Haltebacken mit einem Kühlmittel;

e) Abschalten des Schweißstromes und Lösen der Schweißelektroden;

f) Überführung der Haltebacken aus der Arbeitsstellung in die Bereitschaftsstellung;

g) Schwenkung der Haltebacken zur Positionierung des anderen Endes des Folienpaketes für das Preßschweißen;

h) sinngemäße Durchführung der Schritte c), d), e) und f) für das andere Ende des Folienpaketes.

Durch dieses Verfahren werden die Preßschweißungen an beiden Enden eines Folienpaketes unmittelbar aufeinanderfolgend hergestellt, wobei das Folienpaket ständig zwischen den Haltebacken eingespannt bleibt und damit jede zusätzliche manuelle Handhabung entfällt.

In einer vorteilhaften Weiterbildung des vorstehend angegebenen Verfahrens kann bei horizontaler Arbeitsweise der Schweißelektroden das Folienpaket jeweils nur nahe den zu verschweißenden Enden zwischen den Haltebacken eingespannt werden. Hierdurch wird erreicht, daß der jeweils nicht mit den Schweißelektroden in Berührung zu bringende Teil des Folienpaketes beweglich bleibt und damit insbesondere aus dem Arbeitsbereich der Schweißelektroden herausgehalten werden kann. Diese Abwandlung des Verfahrens gestattet es somit, eine große Vielfalt unterschiedlicher Formen von Strombändern in gleicher Weise herzustellen.

Zur Durchführung des Verfahrens in der einen oder anderen Form kann eine Vorrichtung mit zwei relativ zueinander bewegbaren, die Enden des Folienpaketes zwischen sich aufnehmenden Schweißelektroden dienen, die weitere folgende Merkmalen eingesetzt werden:

Zur Aufnahme des Folienpaketes während des Schweißvorganges sind zwei relativ zueinander bewegbar angeordnete Haltebacken aus gut wärmeleitendem Material vorgesehen, die jeweils wenigstens einen Kanal zur Durchleitung eines Kühlmittels aufweisen, die Haltebacken besitzen ineinandergreifend geformte gleichsinnig gekrümmte Spannflächen, die eine Ersatzform für die Gestalt des fertig verschweißten Folienpaketes bei seiner Benutzung, insbesondere als Stromband, bilden.

Durch diese Gestalt der Haltebacken erhalten die Strombänder nicht nur unmittelbar eine für ihren Einsatzzweck erforderliche Gestalt, sondern es wird auch erreicht, daß die zwischen dem Preßschweißen des einen Endes des Folienstapels und des anderen Endes vorzunehmende Schwenkbewegung auf einen geringen Winkel beschränkt bleibt.

Wie bereits eingangs erwähnt, kommt es zur Aufrechterhaltung der Federeigenschaft der Metallfolien darauf an, den Einflußbereich der Schweißwärme möglichst auf den eigentlichen Schweißbereich zu beschränken. Das hierfür erwünschte satte Anliegen des Folienpaketes an den Haltebacken kann dadurch gefördert werden, daß wenigstens eine der beiden Haltebacken geteilt ausgebildet ist und daß diese Teilstücke durch gesonderte Antriebsmittel bewegbar sind. Insbesondere ist es vorteilhaft, eine innere, nach außen gekrümmte ungeteilte Haltebacke und zwei äußere das Folienpaket gegen die innere Haltebacke anlegende Haltebacken vorzusehen, die jeweils nur den an das zu verschweißende Ende des Folienpaketes anschließenden Bereich überdecken und daß die äußeren Haltebacken aufeinanderfolgend derart bewegbar sind, daß zunächst die erste äußere Haltebacke an das Folienpaket anlegbar ist, nach Durchführung des Schweißvorganges die zweite äußere Haltebacke gegen das Folienpaket bewegbar und anschließend die erste äußere Haltebacke entfernbar ist. Hierdurch wird nämlich erreicht, daß jeweils ein Teil des Folienpaketes, welches dem zu verschweißenden Ende abgewandt ist, ohne Einspannung und daher im Rahmen seiner Biegsamkeit frei beweglich ist. Aufgrund seiner Federung nimmt dieser Teil eine im wesentlichen gestreckte Lage ein, wodurch dieses abgewandte Ende von dem Arbeitsbereich der Schweißelektroden entfernt wird. Diese Vorrichtung gestattet es daher, auch verhältnismäßig kurze und mit relativ starker Krümmung herzustellende Folienpakete zu bearbeiten, bei deren vollständiger Einspannung zwischen den gekrümmten Haltebacken ansonsten ein ungehinderter Zugriff der Schweißelektroden nicht gewährleistet wäre.

Eine zur Durchführung des erläuterten Verfahrens geeignete Vorrichtung, die zwei relativ zueinander bewegbare, ein Ende des Folienpaketes zwischen sich aufnehmende Schweißelektroden aufweist, kann ferner so ausgebildet sein, daß die Haltebacken der Vorrichtung vertikal und horizontal verfahrbar sowie schwenkbar angeordnet sind, wobei der Fahrweg zwecks Übernahme eines außerhalb der Vorrichtung vorbereiteten Folienpaketes bis zum Randbereich der Vorrichtung reichend bemessen ist und wobei der Schwenkweg zur aufeinanderfolgenden Einbringung beider zu verschweißender Enden des Folienpaketes in den Arbeitsbereich der Schweißelektroden ausgebildet ist. Auf diese Weise vermag die Vorrichtung mit einer vorgeschalteten Hilfseinrichtung zusammenzuwirken, welche die Folienpakete bereitstellt.

Wie bereits erwähnt, ist es für die Qualität von Strombändern wesentlich, daß die Metallfolien ihre Federungseigenschaft trotz der Wärmeanwendung durch das Preßschweißen behalten. Hierzu kann, wiederum ausgehend von einer Vorrichtung der zuvor genannten Art, nach einer Weiterbildung der Erfindung eine in Abhängigkeit von der Temperatur der Schweißstelle steuerbare Schalteinrichtung zur Beeinflussung des Schweißstromes vorgesehen sein. Dies kann mit Hilfe eines Infrarotdetektors erfolgen, der die Temperatur einer relativ eng begrenzten Stelle eines Werkstückes aus der Entfernung zu erfassen vermag. Die Temperaturmessung an einer Schweißstelle mittels eines Infrarotdetektors und die Beeinflussung des Schweißstromes hierdurch ist an sich bekannt (Patent Abstracts of Japan, Band 7, Nr. 199 (M-240) 1344 vom 3. Sept. 1983).

Bei der vorstehend erläuterten Vorrichtung können ferner zwei Infrarotdetektoren vorgesehen sein, die auf unterschiedliche Stellen des zu verschweißenden Endes des Folienpaketes gerichtet sind, und die Schalteinrichtung kann zwei in Abhängigkeit von der gemessenen Temperatur wirksame Schaltstufen besitzen, von denen die erste eine Verringerung des Schweißstromes und die zweite eine Unterbrechung des Schweißstromes bewirkt. Hierdurch wird erreicht, daß der zu verschweißende Bereich zunächst mit einem relativ hohen Strom rasch aufgeheizt wird und daß anschließend die höchste erwünschte Temperatur ohne die Gefahr einer örtlichen Überhitzung erreicht wird. Als vorteilhaft hat es sich in diesem Zusammenhang erwiesen, die beiden Infrarotdetektoren auf die stirnseitigen Eckbereiche des zwischen den Schweißelektroden aufzunehmenden Endes des Folienpaketes zu richten. An diesen Stellen ist nämlich der Wärmeabfluß am geringsten, so daß dementsprechend die Gefahr einer Überhitzung hier am größten ist.

Im Betrieb einer Vorrichtung der genannten Art kann zur Steigerung der Qualität der Schweißverbindungen anstelle des üblicherweise benutzten Wechselstromes ein durch Gleichrichtung eines Mehrphasen-Wechselstromes gewonnener Gleichstrom dienen. Dies ist mit einer Reihe von Vorteilen verbunden, insbesondere besteht eine geringere Neigung zur Bildung von Spratzern während des Schweißens, der Schweißstrom ist niedriger und die Zone des Wärmeeinflusses bleibt enger begrenzt. Ferner tritt keine Vibration auf, so daß die Vorrichtung geschont wird und die Belästigung des Bedienenden durch Geräusche vermindert ist.

Die Erfindung wird im folgenden anhand des in den Figuren gezeigten Ausführungsbeispieles näher erläutert.

Die Fig. 1 zeigt eine zur Verwendung in einem Niederspannungs-Leistungsschalter vorgesehenes Stromband.

In der Fig. 2 sind Haltebacken in Verbindung mit einem durch Preßschweißen an den Enden zu verbindenden Folienstapel gezeigt.

Die Fig. 3 zeigt die Haltebacken gemäß der Fig. 2 im geschlossenen Zustand.

Die Fig. 4 ist eine schematische Darstellung einer Vorrichtung zur Herstellung von Strombändern in Verbindung mit einer Zuschnittvorrichtung.

Die Fig. 5 ist ein schematisches Schaltbild einer Schalteinrichtung zur Steuerung des Temperaturverlaufes beim Preßschweißen.

Die Fig. 6 ist ein Diagramm zur Darstellung der Abhängigkeit der Temperatur innerhalb eines Folienpaketes beim Preßschweißen von der Zeit.

Die Fig. 7 zeigt eine weitere Ausführungsform von Haltebacken, wobei zwei äußere, getrennt bewegbare Haltebacken vorgesehen sind.

In der Fig. 8 ist dargestellt, wie ein Folienpaket zwischen einer inneren und einer der äußeren Haltebacken (Fig. 7) eingespannt ist, während die Fig. 9 die Einspannung zwischen der inneren Haltebacke und der anderen äußeren Haltebacke zeigt.

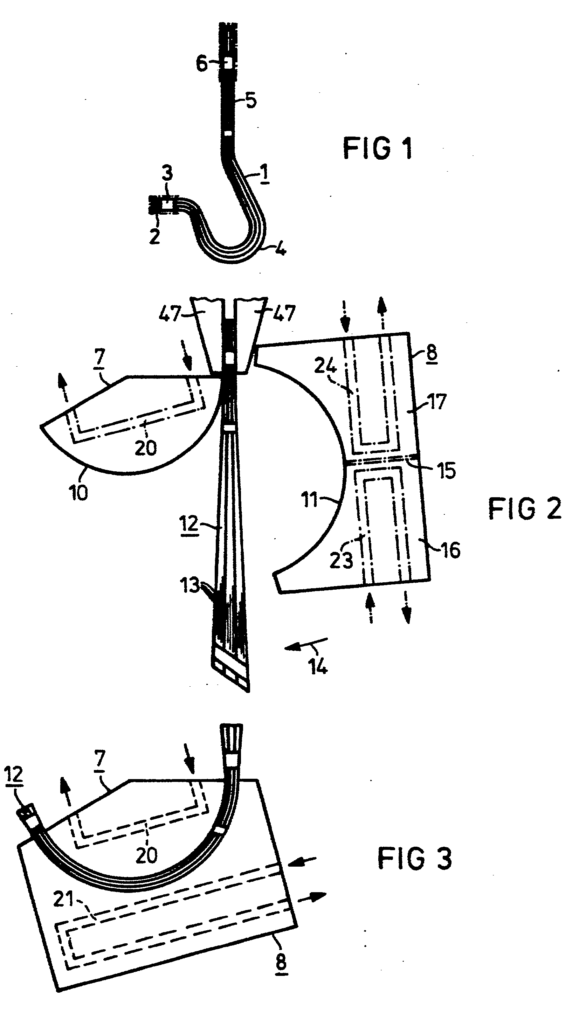

In der Fig. 1 ist ein Stromband 1 gezeigt, das zur Verbindung einer ortsfesten Klemmstelle mit einem beweglichen Kontaktteil im Kontaktapparat eines Niederspannungs-Leistungsschalters vorgesehen ist. Das Stromband 1 besteht aus einer Anzahl dünner Folien aus Kupferblech, beispielsweise 120 Folien mit einer Dicke von 0,05 mm. Die Breite der Folien kann entsprechend der geforderten Stromtragfähigkeit des Strombandes 1 gewählt werden, beispielsweise so, daß ein Dauerstrom von 1000 A geführt werden kann. In der Fig. 1 ist das Stromband 1 in der Form gezeigt, die es im eingebauten Zustand einnimmt. Zur Verbindung mit einem ortsfesten Anschlußstück sind die Folien des Strombandes an dem unteren Ende zur Bildung eines Anschlußbereiches 2 etwa über die Länge der in der Fig. 1 strichpunktierten eingezeichneten Markierung durch Preßschweißen miteinander verbunden. Eine Öffnung 3 ist zum Durchtritt einer Klemmschraube vorgesehen. An den Anschlußbereich 2 schließt sich ein etwa U-förmig gekrümmter Bereich 4 an, der in einen oberen, geraden Anschlußbereich 5 übergeht, dessen gleichfalls strichpunktiert markierter Teil wiederum durch Preßschweißung verbunden ist. Der Anschlußbereich 5 enthält ebenfalls eine Durchtrittsöffnung 6 für eine Klemmschraube, um das Stromband 1 beispielsweise mit einem bewegbaren Kontakthebel zu verbinden Die Anordnung von Strombändern innerhalb eines Leistungsschalters ist beispielsweise der US-A 3 550 049 zu entnehmen und wird daher im folgenden nicht näher erläutert.

Als Bestandteil einer Vorrichtung zur Herstellung von Strombändern sind in der Fig. 2 relativ zueinander schwenkbar angeordnete Haltebacken 7 und 8 gezeigt. Beide Haltebacken weisen ineinandergreifende zylindrisch gekrümmte Spannflächen 10 bzw. 11 auf, deren Radien entsprechend der Dicke eines zur Herstellung eines Strombandes 1 vorbereiteten Folienpaketes 12 unterschiedlich bemessen sind. Die mittlere Krümmung der Spannflächen 10 und 11 ist dabei so gewählt, daß sie im Ergebnis der Form des in der Fig. 1 gezeigten fertigen Strombandes 1 entspricht und somit die Enden der einzelnen Folien 13 bei geschlossenen Haltebacken 7 und 8 bündig abschließen, wenn die einzelnen Folien entsprechend ihrer Stellung in dem Folienpaket unterschiedlich lang bemessen sind, wie dies die Fig. 2 schematisch zeigt.

Die Spannvorrichtung wird durch eine Schwenkung der Haltebacke 8 in Richtung eines in der Fig. 2 gezeigten Pfeiles 14 geschlossen, wodurch die Teile die in der Fig. 3 gezeigte Lage einnehmen. Infolge der genauen Zuordnung der Krümmungsradien der Spannflächen 10 und 11 und der Dicke des Folienstapels 13 liegen die Haltebacken an dem Folienstapel vollkommen bündig an. Die beim Vergleich der Fig. 2 und 3 ersichtliche Relativbewegung der Haltebacken 7 und 8 kann durch eine zweckmäßige Anordnung von pneumatischen oder hydraulischen Arbeiszylindern erzeugt werden, wie sie in der Technik der Werkzeugmaschinen allgemein üblich sind. Es ist daher nicht erforderlich, auf den Aufbau und die Steuerung solcher Druckzylinder im Rahmen der vorliegenden Anmeldung näher einzugehen.

Für das Arbeitsergebnis des noch zu erläuternden Schweißvorganges ist es wesentlich, daß die Haltebacken 7 und 8 insbesondere in ihren Randbereichen an dem Folienpaket 13 gut anliegen, um einen möglichst ungehinderten Wärmeübergang zu gewährleisten. Hierzu empfiehlt es sich, die Andruckkraft zwischen den Haltebacken 7 und 8 so einzuleiten, daß sich die Haltebacken ungehindert gegeneinander ausrichten können. Darüberhinaus kann es vorteilhaft sein, die Haltebacke 8 mit der nach innen gekrümmten Spannfläche 11 geteilt auszuführen, um eine leichtere Ausrichtung auf die Haltebacke 7 mit der nach außen gewölbten Spannfläche 10 zu erreichen. Auf diese Weise kann auch in gewissen Grenzen eine Toleranz der Dicke des Folienpaketes 13 aufgefangen werden. Ein Beispiel für eine geteilte Ausführung der einen Haltebacke ist in der Fig. 2 gestrichelt eingezeichnet. Durch eine Trennfuge 15 sind in diesem Fall zwei symmetrische Teilbacken 16 und 17 gebildet, die gemeinsam, jedoch unabhängig voneinander bewegbar sind.

Um den Einfluß der Erwärmung während des Preßschweißens möglichst auf die Schweißzonen zu beschränken, kommt es auf eine wirksame Kühlung des Folienpaketes 12 an. Hierfür ist nicht nur die bereits erwähnte satte Anlage der Haltebacken 7 und 8 an dem Folienpaket 12 wesentlich, sondern auch die Wärmeleitung der Haltebacken. Als Werkstoff zur Herstellung der Haltebacken 7 und 8 ist daher beispielsweise Kupfer gut geeignet. Ferner sind die Haltebacken mit einem oder mehreren Kanälen zur Durchleitung eines flüssigen Kühlmittels, insbesondere Wasser, versehen. Je ein etwa U-förmig verlaufender Kanal 20 bzw. 21 ist der Fig. 3 zu entnehmen. In Abhängigkeit von der Breite der Haltebacken 7 und 8 können auch mehrere Kanäle der gezeigten Form in paralleler Anordnung vorgesehen sein. Wird die Anordnung mit symmetrischen Teilbacken 16 und 17 gewählt, so enthält jede dieser Teilbacken einen oder mehrere Kanäle 23 bzw. 24.

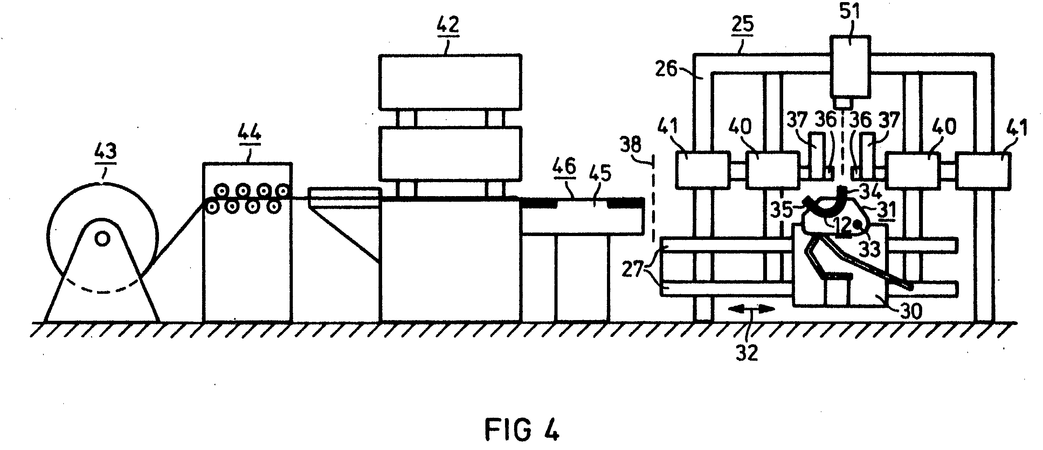

Die Anordnung einer anhand der Fig. 2 und 3 erläuterten Spannvorrichtung innerhalb der Gesamtvorrichtung ist aus der Fig. 4 ersichtlich. Eine dort gezeigte Vorrichtung 25 umfaßt diejenigen Komponenten, die benötigt werden, um vorbereitete Folienpakete 12 an beiden Enden 34 und 35 preßzuschweißen. Hierzu umfaßt die Vorrichtung 25 einen Rahmen 26, an dem horizontale Führungsschienen 27 für einen Schlitten 30 angebracht sind, der eine als Ganzes mit 31 bezeichnete, Haltebacken gemäß den Fig. 2 und 3 aufweisende Spannvorrichtung trägt. Mit Hilfe des Schlittens 30 ist die Spannvorrichtung 31 in der Richtung des Doppelpfeiles 32 horizontal verfahrbar. Ferner ist die Spannvorrichtung 31 an dem Schlitten 30 um ein Schwenklager 33 derart schwenkbar und vertikal verschiebbar angebracht, daß die Enden 34 und 35 nacheinander in den Arbeitsbereich von zwei einander gegenüberstehend angeordneten Schweißelektroden 36 gebracht werden können. Die an Haltern 37 lösbar befestigten Schweißelektroden sind mit Hilfe von Führungskörpern 40 horizontal verschiebbar und können durch in der Verlängerung der Führungsachse angeordnete Druckzylinder 41 mit einer Preßkraft beaufschlagt werden. Die Führungskörper 40 und die Druckzylinder 41 sind an vertikalen Streben des Rahmens 26 befestigt

Der Vorrichtung 25 ist eine Stanzvorrichtung 42 vorgeordnet, die zur Herstellung der Srombänder (Fig. 1) vorgesehenes Metallband, z. B. Kupfer oder Aluminium, nach Entnahme von einer Vorratsrolle 43 und Durchgang durch ein Richtwerk 44 mit Lochungen entsprechend der Durchlöcher 3 und 6 in Fig. 1 versieht und Abschnitte der benötigten Länge von dem Band abtrennt. Eine jeweils benötigte Anzahl von Einzelfolien wird auf einem Ablagetisch 45 einer Übergabevorrichtung 46 gestapelt und zur Übernahme durch die Spannvorrichtung 31 bereitgehalten. Hierzu wird die Spannvorrichtung 31 auf den Führungsschienen 27 bis zum linken Randbereich 38 der Vorrichtung 25 in Richtung des Pfeiles 32 verfahren und mittels in der Fig. 2 gezeigter Greifbacken 47 in vertikaler Stellung zur Erfassung durch die Haltebacken 7 und 8 bereitgehalten.

Anschließend wird das Folienpaket 12 (Fig. 2) auf den Führungsschienen 27 in die in der Fig. 4 gezeigte Bereitschaftsstellung verfahren und dann vertikal soweit nach oben bewegt, daß das Ende 34 des Folienpaketes 12 zwischen die Schweißelektroden 36 gelangt (Arbeitsstellung). Diese werden dann mittels der Druckzylinder 41 gegen die Enden des Folienpaketes 12 gepreßt. Durch anschließendes Hindurchleiten eines Stromes geeigneter Größe werden die Folien in bekannter Weise miteinander verbunden. Durch die Wärmekapazität der Haltebacken 7 und 8 sowie das durch die Haltebacken hindurchgeleitete Kühlmittel wird dafür gesorgt, daß die Erwärmung im wesentlichen auf die Anlagefläche der Schweißelektroden an dem Folienpaket 12 beschränkt bleibt und die Eigenschaften der Metallfolien anschließend an die Schweißzone möglichst wenig beeinträchtigt werden.

Anschließend an die Preßschweißung des Endes 34 wird die Haltevorrichtung 31 aus der Arbeitsstellung in die Bereitschaftsstellung abgesenkt. Nach einem Verfahren nach rechts und einer Schwenkbewegung wird nun die Haltevorrichtung erneut vertikal nach oben in die Arbeitsstellung gebracht, in der jetzt das Ende 35 zwischen die Schweißelektroden 36 ragt. Nach der zweiten Preßschweißung ist das Folienpaket 12 somit zu einem fertigen Stromband verbunden. Um einen erwärmungsarmen Stromübergang beim Einbau in ein Schaltgerät zu erreichen, kann es noch zweckmäßig sein, die Enden 34 und 35 zu verzinnen oder zu versilbern.

Die beschriebenen Vorgänge sind periodisch durchführbar, indem anschließend an den beschriebenen Herstellungsgang die Spannvorrichtung 31 wieder nach links zu dem Randbereich 38 der Vorrichtung 25 zwecks Übernahme eines weiteren Folienpaketes 12 von der Übergangsvorrichtung 46 verfahren wird. Mit Hilfe einer üblichen Taktsteuerung sind diese Vorgänge selbsttätig durchführbar.

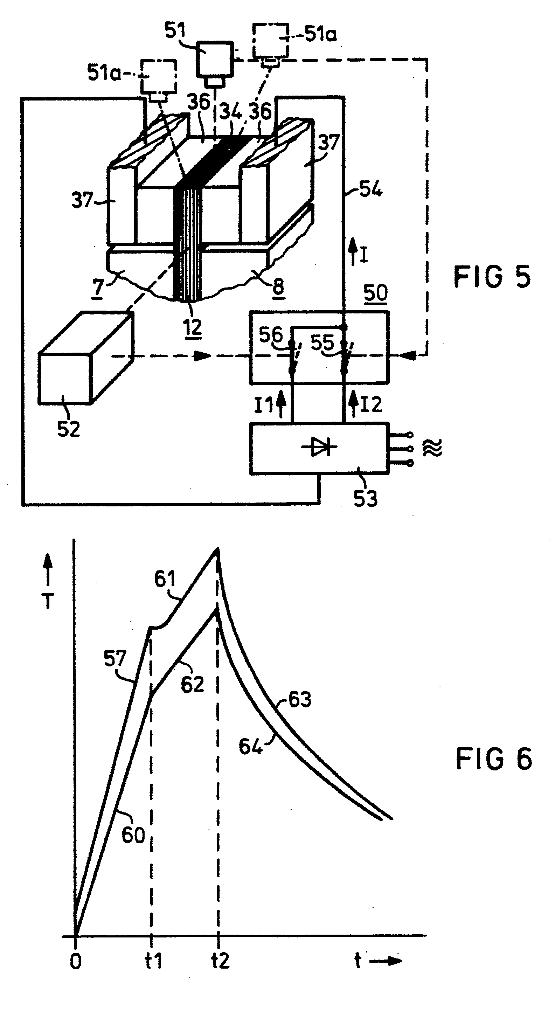

Da zur Fertigung einer Schaltgerätereihe unterschiedliche Strombänder benötigt werden, ist es erforderlich, die Höhe des Schweißstromes und die Dauer des Stromflusses genau zu bemessen, damit unabhängig von dem jeweils zu verschweißenden Querschnitt der Folienpakete eine gleichmäßige Qualität der Schweißung erzielt wird. Dies wird durch eine temperaturabhängig steuerbare Schalteinrichtung 50 gemäß der Fig. 5 erreicht, die nachstehend erläutert wird. In dieser Figur sind die Haltebacken 7 und 8 sowie das zwischen ihnen eingespannte Folienpaket 12 abgebrochen dargestellt. Das freie Ende 34 des Folienpaketes 12 befindet sich zwischen den Schweißelektroden 36, deren Halter 37 gleichfalls abgebrochen dargestellt sind. Ein Infrarotdetektor 51 ist oberhalb des freien Endes 34 des Folienpaketes 12 angeordnet und erfaßt die Temperatur an der Stirnfläche des freien Endes 34. Der Infrarotdetektor 51 kann an dem Rahmen 26 der Vorrichtung 25 so angebracht sein, wie dies die Fig. 4 zeigt. Ein weiterer Infrarotdetektor 52 ist so angeordnet, daß er die Temperatur nahe den Haltebacken 6 und 7 erfaßt. Auf diese Weise werden Meßwerte für die Temperatur des Folienpaketes 12 während des Schweißvorganges gewonnen. Werden bestimmte Grenzwerte gemessen, so gelangen Steuersignale zu der Schalteinrichtung 50 und bewirken noch zu erläuternde Schalthandlungen.

Die Schalteinrichtung 50 liegt im Stromkreis 54 einer Stromversorgungseinrichtung 53, die vorzugsweise aus dem Drehstromnetz gespeist wird und Drehstrom in Gleichstrom umformt. Dies ist vorteilhaft gegenüber der Anwendung eines Einphasen-Wechselstromes als Schweißstrom, da einerseits der dem Netz entnommene primäre Phasenstrom wesentlich geringer ist, nur sehr geringe Geräusche und Vibrationen auftreten und keine Stromverdrängung in den benötigten großen Leiterquerschnitten auftritt. Darüberhinaus wird eine bessere Qualität der Schweißverbindungen erhalten. Die Stromversorgungseinrichtung 53 gestattet die Entnahme von Strömen unterschiedlicher Höhe, wobei zur Vereinfachung der Darstellung angenommen ist, daß der in dem Schweißstromkreis 54 fließende Strom I durch die Summierung von zwei der Stromversorgungseinrichtung 53 zu entnehmenden Teilströmen I1 und I2 zusammengesetzt ist. Die unterschiedliche Höhe der Ströme kann selbstverständlich durch beliebige geeignete Mittel, beispielsweise eine Anschnittsteuerung mit Thyristoren, bewirkt sein.

Sind beide in der Schalteinrichtung 50 enthaltenen Schaltkontakte 55 und 56 geschlossen, so entspricht der Strom I der Summe der Teilströme I1 und I2. Dadurch kommt es zu einem Temperaturanstieg an den durch die Infrarotdetektoren 51 und 52 erfaßten Stellen des Endes 34 des Folienpaketes 12, wie dies der Fig. 6 zu entnehmen ist. Der steiler ansteigende Kurvenast 57 entspicht dabei der Meßstelle des Infrarotdetektors 51, während der Kurvenast 60 der Meßstelle des Infrarotdetektors 52 entspricht. Wie man erkennt, sind die zu dem Zeitpunkt tl erreichten Temperaturen beider Meßstellen unterschiedlich. Dies beruht darauf, daß durch die Einspannung des Folienpaketes 12 zwischen den Haltebacken 7 und 8 Wärme in stärkerem Maß abfließt, als dies an der Stirnfläche am oberen Ende des Folienpaketes 12 der Fall ist. Die Grenzwertgeber der Infrarotdetektoren 51 und 52 sind nun so eingestellt, daß sie Ausgangssignale abgeben, wenn eine höchste zulässige und eine niedrigere erforderliche Temperatur erreicht sind. In der Fig. 5 ist durch gestrichelte Linie angedeutet, daß die Steuersignale der Infrarotdetektoren 51 und 52 eine Öffnung des Schaltkontaktes 55 bzw. 56 der Schalteinrichtung 50 bewirken und hierdurch die Teilströme l1 bzw. l2 unterbrechen.

Zunächst wird daher mittels des Infrarotdetektors 51 der Schaltkontakt 55 geöffnet. Der weitere Anstieg der Temperatur vollzieht sich nun mit verringerter Steilheit, wie die Kurvenäste 61 und 62 in der Fig. 6 zeigen. Auf diese Weise wird erreicht, daß beide Stellen bis zum Zeitpunkt t2 eine zur einwandfreien Verschweißung ausreichende, andererseits jedoch nicht zu hohe Temperatur erreichen, die mit Verzunderung oder Schmelzerscheinungen verbunden wäre. Im Zeitpunkt t2 veranlaßt der Infrarotdetektor 52 die Öffnung des Schaltkontaktes 56 und damit die völlige Unterbrechung des Schweißstromes. Die Kurvenäste 63 und 64 lassen erkennen, wie die Temperatur nach dem Abschalten des Schweißstromes asymptotisch absinkt.

Zum Verständnis des in der Fig. 6 gezeigten Temperaturverlaufes in Abhängigkeit von der Zeit sei noch erwähnt, daß die Temperatur bei aus Kupfer bestehenden Folien 1000°C nicht überschreiten soll, während zur Erreichung einer festen Preßschweißung eine Temperatur von 800°C nicht unterschritten werden sollte. Diese Temperaturen werden je nach dem Volumen des durch Preßschweißen zu verbindenden Bereiches und der Höhe des Stromes I nach etwa 10 bis 40 sec. erreicht.

Wie anhand der Fig. 5 leicht zu erkennen ist, hat man es durch geeignete Ausrichtung der Infrarotdetektoren 51 und 52 in der Hand, die Temperatur an eng begrenzten Bereichen des Folienpaketes 1 zu erfassen. Es empfiehlt sich daher, durch Versuche festzustellen, wo sich die kritischen Stellen befinden und die Infrarotdetektoren entsprechend zu positionieren. Mit Hilfe der Vorrichtung 25 können somit Strombänder unterschiedlicher Abmessungen und Gewichte in gleichmäßiger Qualität gefertigt werden.

In der Fig. 5 sind hierzu strichpunktiert zwei Infrarotdetektoren 51a gezeigt, die auf die Eckbereiche der Stirnfläche des Endes 34 des Strombandes 12 gerichtet sind. Hiedurch werden die Stellen erfaßt, an denen der Wärmeabfluß am geringsten und daher die Gefahr einer Überhitzung am größten ist. Jeweils die höhere der beiden gemessenen Temperaturen führt zur Betätigung der Schalteinrichtung 50 und damit zur Verringerung und späteren Abschaltung des Schweißstromes. Wird der Infrarotdetektor 51a verwendet, so kann die weitere Meßstelle mit dem Infratotdetektor 52 entfallen.

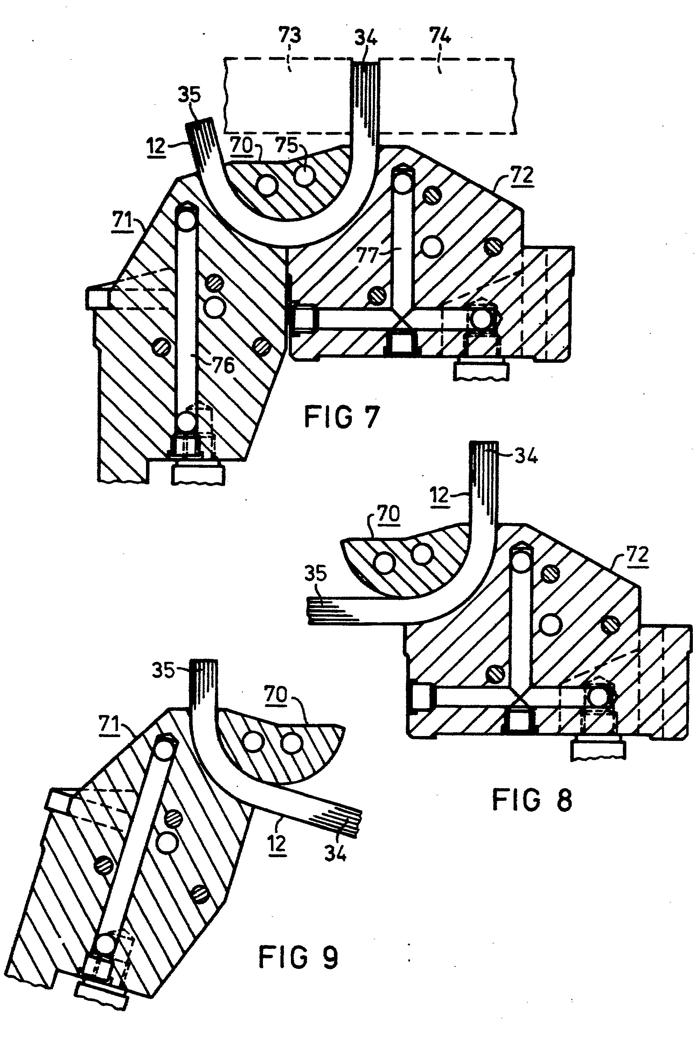

Im folgenden wird anhand der Fig. 7, 8 und 9 eine Anordnung mit geteilten Haltebacken beschrieben. Wie diese Figuren zeigen, stehen einer inneren ungeteilten Haltebacke 70 zwei äußere Haltebacken 71 und 72 gegenüber, die das Folienpaket 12 lückenlos übergreifen, wenn sie beide entsprechend der Fig. 7 an dem Folienpaket 12 anliegen. Dieser Zustand besteht jedoch nur kurzzeitig, wie noch erläutert wird. Wie bereits früher erwähnt, enthalten die Haltebacken Kanäle zur Durchleitung eines Kühlmittels. Hierzu ist die innere Haltebacke 70 mit einem Kanal 75 versehen, während die Kühlkanäle in den Haltebacken 71 und 72 mit 76 bzw. 77 bezeichnet sind. In der Fig. 7 sind ferner gestrichelt Schweißelektroden 73 und 74 angedeutet, die zum Anlegen an das Ende 34 horizontal bewegbar sind. Aufgrund der gegebenen Länge des Folienpaketes 12 und der mit Rücksicht auf die spätere Verwendung als Stromband gewählten Ersatzkrümmung der Haltebacken ragt somit das Ende 35 des Folienpaketes 12 in den Weg der linken Schweißelektrode 73. Ein ungehindertes Arbeiten wird dennoch dadurch ermöglicht, daß das Folienpaket 12 jeweils nur zwischen der inneren Haltebacke 70 und einer der beiden äußeren Haltebacken 71 und 72 gespannt wird, wie dies die Fig. 8 und 9 zeigen.

Zunächst wird die Stellung der Teile gemäß der Fig. 8 betrachtet. Hierbei nimmt das Ende 34 bezüglich der Schweißelektroden 73 und 74 in Fig. 7 dieselbe Stellung ein, jedoch kann der nicht erfaßte Teil des Folienpaketes 12 aufgrund seiner Federung eine gestreckte Stellung einnehmen, so daß er sich nun außerhalb des Arbeitsbereiches der Schweißelektroden 73 und 74 befindet. Ist die Preßschweißung an dem Ende 34 durchgeführt, so wird zunächst, wie bereits früher erläutert, die Anordnung aus der Arbeitsstellung in die Bereitschaftsstellung, d.h. vertikal nach unten verfahren. Anschließend wird die Haltebacke 71 ebenfalls an das Folienpaket 12 angelegt, so daß nun die Stellung gemäß der Fig. 7 besteht. Anschließend wird die Haltebacke 72 entfernt, so daß nun das bereits geschweißte Ende 34 aufgrund seiner Federung und seines Gewichtes eine mehr oder weniger gestreckte Stellung etwa gemäß der Fig. 9 einnimmt. Anschließend wird die Anordnung der Haltebacken 70 und 71 derart geschwenkt, daß nun das Ende 35 die für den Angriff der Schweißelektroden 73 und 74 geeignete vertikale Stellung einnimmt. Ausgehend hiervon wird die Anordnung aus der Bereitschaftsstellung wieder in die Arbeitsstellung gebracht.

Eine Vorrichtung mit getrennt bewegbaren äußeren Haltebacken entsprechend den Fig. 7, 8 und 9 ist somit zur Verarbeitung von Folienpaketen unterschiedlicher Längen geeignet, da in jedem Fall der Zutritt der Schweißelektroden ungehindert möglich ist. Es ist lediglich erforderlich, die Haltebacken mit dem geeigneten Krümmungsradius und der passenden Breite in die Vorrichtung als auswechselbare Werkzeuge einzusetzen. Einheitliche Kupplungsstücke für den Angriff von Betätigungseinrichtungen z. B. von Pneumatik- oder Hydraulikzylindern für den Bewegungsablauf und die Einleitung eines Kühlmittels sorgen dafür, daß der Werkzeugwechsel ohne großen Arbeitsaufwand durchzuführen ist.

**Patentansprüche**

1. Verfahren zur örtlichen Verbindung paketierter streifenförmiger Metallfolien (13) durch elektrisches Preßschweißen an beiden Enden des Folienpaketes (12), mit Schweißelektroden (36; 73, 74) zur Hindurchleitung eines Schweißstromes (I) durch den zu verbindenden Bereich (Enden 34, 35) des Folienpaketes (12) sowie mit einer Einrichtung zur Wärmeabfuhr aus dem Folienpaket (12), mit folgenden, aufgrund einer Ablaufsteuerung nacheinander erfolgenden Schritten:

a) Aufnahme eines bereitgestellten Folienpaketes (12) zwischen Haltebacken (7, 8; 70, 71, 72) mit beidseitigem Überstand der Enden des Folienpaketes (12);

b) Überführung der Haltebacken (7, 8) in eine nahe bei den Schweißelektroden (36) vorgesehene Bereitschaftsstellung;

c) Überführung der Haltebacken (7, 8; 70, 71 bzw. 70, 72) aus der Bereitschaftsstellung in eine Arbeitsstellung, in der das eine Ende (34) des Folienpaketes (12) zwischen die Schweißelektroden (36) ragt;

d) Anlegen der Schweißelektroden (36; 73, 74) an das eine Ende (34) des Folienpaketes (12), Hindurchleitung eines Schweißstromes (I) durch das Folienpaket (12) und Beaufschlagung der Haltebacken (7, 8; 70, 71, 72) mit einem Kühlmittel;

e) Abschalten des Schweißstromes (I) und Lösen der Schweißelektroden (36; 73, 74);

f) Überführung der Haltebacken (7, 8; 70, 71 bzw. 70, 72) aus der Arbeitsstellung in die Bereitschaftstellung;

g) Schwenkung der Haltebacken (7, 8; 70, 71 bzw. 70, 72) zur Positionierung des anderen Endes (35) des Folienpaketes (12) für das Preßschweißen;

h) sinngemäße Durchführung der Schritte c), d), e) und f) für das andere Ende (35) des Folienpaketes (12).

2. Verfahren nach Anspruch 1, dadurch gekennzeichnet, daß bei horizontaler Arbeitsweise der Schweißelektroden (73, 74) das Folienpaket (12) jeweils nur nahe den zu verschweißenden Enden (34, 35) zwischen den Haltebacken (70, 71 bzw. 70, 73) eingespannt wird.

3. Verfahren nach Anspruch 1 oder 2, dadurch gekennzeichnet, daß eine in Abhängigkeit von der Temperatur der Schweißstelle steuerbare Schalteinrichtung (50) zur Beeinflussung des Schweißstromes (I) vorgesehen ist und daß der Schalteinrichtung (50) zur Gewinnung eines temperaturabhängigen Steuersignals ein Infrarotdetektor (51) zugeordnet ist.

4. Verfahren nach einem der Ansprüche 1 bis 3, dadurch gekennzeichnet, daß der Schweißstrom (I) ein in einer Stromversorgungseinrichtung (53) durch Gleichrichtung eines Mehrphasen-Wechselstromes gewonnener Gleichstrom ist.

5. Vorrichtung mit zwei relativ zueinander bewegbaren, die Enden (34, 35) des Folienpaketes (12) zwischen sich aufnehmenden Schweißelektroden (73, 74) zur Durchführung des Verfahrens nach einem der Ansprüche 1 bis 4, gekennzeichnet durch folgende Merkmale:

Zur Aufnahme des Folienpaketes (12) während des Schweißvorganges anschließend an die zu verschweißenden Enden (34, 35) sind zwei relativ zueinander bewegbar angeordnete Haltebacken (7, 8; 70, 71, 72) aus gut wärmeleitendem Material vorgesehen, die jeweils wenigstens einen Kanal (20, 21) zur Durchleitung eines Kühlmittels aufweisen, die Haltebacken (7, 8; 70, 71, 72) besitzen ineinandergreifend geformte gleichsinnig gekrümmte Spannflächen (10, 11), die eine Ersatzform für die Gestalt des fertig verschweißten Folienpaketes bei seiner Benutzung (Stromband 1) bilden.

6. Vorrichtung nach Anspruch 5 dadurch gekennzeichnet, daß wenigstens eine der beiden zusammenwirkenden Haltebacken (7, 8) geteilt ausgebildet ist und daß die Teilstücke (16, 17) durch gesonderte Antriebsmittel bewegbar sind.

7. Vorrichtung nach Anspruch 5, dadurch gekennzeichnet, daß eine innere, nach außen gekrümmte ungeteilte Haltebacke (70) und zwei äußere, das Folienpaket (12) gegen die innere Haltebacke (70) anlegende Haltebacken (71, 72) vorgesehen sind, die jeweils nur den an das zu verschweißende Ende (34, 35) des Folienpaketes (12) anschließenden Bereich des Folienpaketes (12) überdecken und daß die äußeren Haltebacken (71, 72) aufeinanderfolgend derart bewegbar sind, daß zunächst die erste äußere Haltebacke (71) an das Folienpaket (12) angelegbar ist, nach Durchführung des Schweißvorganges die zweite äußere Haltebacke (72) gegen das Folienpaket (12) bewegbar und anschließend die erste äußere Haltebacke (71) entfernbar ist.

8. Vorrichtung nach einem der Ansprüche 5 bis 7, dadurch gekennzeichnet, daß die Haltebacken (7, 8) vertikal und horizontal verfahrbar sowie schwenkbar angeordnet sind, wobei der Verfahrweg zwecks Übernahme eines außerhalb der Vorrichtung (25) vorbereiteten Folienpaketes (12) bis zum Randbereich (38) der Vorrichtung (25) reichend bemessen ist und wobei der Schwenkweg zur aufeinanderfolgenden Einbringung beider zu verschweißenden Enden (34, 35) des Folienpaketes (12) in den Arbeitsbereich der Schweißelektroden (36) ausgebildet ist.

9. Vorrichtung nach Anspruch 8, dadurch gekennzeichnet, daß zwei Infrarotdetektoren (51, 52) vorgesehen sind, von denen der eine (51) auf die Stirnfläche des freien Endes (34) des Folienpaketes (12) und der zweite (52) auf den Bereich des Folienpaketes (12) nahe den Haltebacken (7, 8) gerichtet ist und daß die Schalteinrichtung (50) zwei in Abhängigkeit von der Temperatur am freien Ende des Folienpaketes (12) sowie in Abhängigkeit von der Temperatur nahe den Haltebacken (7, 8) wirksame Schaltstufen (Schaltkontakte 55, 56) besitzt, von denen die erste eine Verringerung des Schweißvorganges (I) und die zweite die Unterbrechung des Schweißvorganges (I) bewirkt.

10. Vorrichtung nach Anspruch 8, dadurch gekennzeichnet, daß zwei Infrarotdetektoren (51, 51a) vorgesehen sind, die auf die stirnseitigen Eckbereiche des zwischen den Schweißelektroden (36) aufzunehmenden Endes (34) des Folienpaketes (12) gerichtet sind.

## Claims

1. Process for the local connection of packet-like lamellar metal foils (13) through electric pressure welding on both ends of the foil packet (12), with welding electrodes (36; 73, 74) for conducting a welding current (I) through the regions (ends 34, 35) of the foil packets (12) which are to be connected and with a device for the dissipation of heat from the foil packet (12), with the following steps which take place consecutively by virtue of a process control:
a) Taking up of a prepared foil packet (12) between holding jaws (7, 8; 70, 71, 72) with the ends of the foil packet (12) projecting on both sides:
b) Transfer of the holding jaws (7, 8) into an initial position near the welding electrodes (36);
c) Transfer of the holding jaws (7, 8; 70, 71 or 70, 72) from the initial position into a working position in which the one end (34) of the foil packet (12) projects between the welding electrodes (36);
d) Applying the welding electrodes (36; 73, 74) onto the one end (34) of the foil packet (12) conducting a welding current (I) through the foil packet (12) and acting upon the holding jaws (7, 8; 70. 71, 72) with a cooling agent;
e) switching off of the welding current (I) and release of the welding electrodes (36; 73, 74);
f) Transfer of the holding jaws (7, 8; 70, 71 or 70, 72) from the working position into the initial position;
g) Swinging of the holding jaws (7, 8; 70, 71 or 70, 72) for positioning the other end (35) of the foil packet (12) for pressure welding;
h) Corresponding execution of steps c), d), e) and f) for the other end (35) of the foil packet (12).

2. Process according to claim 1, characterised in that given a horizontal method of operation of the welding electrodes (73, 74) the foil packet (12) is clamped between the respective holding jaws (70, 71 or 70, 72) only near the ends (34, 35) to be welded.

3. Process according to claim 1 or 2, characterised in that a switching device (50) for influencing the welding current (I) is provided, this switching device being controllable in dependence on the temperature of the welding point, and in that an infrared detector (51) is assigned to the switching device (50) for obtaining a temperature-dependent control signal.

4. Process according to one of claims 1 to 3, characterised in that the welding current (I) is a direct current produced in a current generating device (53) by rectifying a multi-phase alternating current.

5. Device with two welding electrodes (73, 74), movable relative to one another, which take up the ends (34, 35) of the foil packet (12) between them for carrying out the process according to one of claims 1 to 4, characterised by the following features:
In order to hold the foil packet (12) adjacently to the ends to be welded (34, 35) during the welding process, two holding jaws (7, 8; 70, 71, 72), made from good heat conducting material and arranged so that they can be moved relative to one another, are provided which each have at least one duct (20, 21) for passage of a coolant, the holdings jaws (7, 8; 70, 71, 72) have clamping surfaces (10, 11) curved in the same direction and constructed so that they reach into one another, which form a shape equivalent to the finished welded foil packet when in use (current lead 1).

6. Device according to claim 5, characterised in that at least one of the two interacting holding jaws (7, 8) is split and in that the part pieces (16, 17) can be moved by special drive means.

7. Device according to claim 5, characterised in that an inner undivided holding jaw (70), curved towards the outside, and two outer holding jaws (71, 72) placing the foil packet (12) against the inner holding jaw (70) are provided which respectively cover only that region of the foil packet (12) which adjoins the ends (34, 35) of the foil packet (12) to be welded and in that the outer holding jaws (71, 72) can be moved consecutively in such a way that first of all the first outer holding jaw (71) can be placed onto the foil packet (12), after the welding process has been carried out the second outer holding jaw (72) can be moved towards the foil packet (12) and the first outer holding jaw (71) can subsequently be removed.

8. Device according to one of claims 5 to 7, characterised in that the holding jaws (7, 8) are arranged for travel vertically and horizontally and for pivoting movement, the travel path being of a size reaching up to the edge area (38) of the device (25) for the purpose of taking over a foil packet (12) prepared outside the device (25) and the pivoting path being designed for the consecutive insertion of the two ends (34, 35) of the foil packet (12) which are to be welded into the operating region of the welding electrodes (36).

9. Device according to claim 8, characterised in that two infra-red detectors (51, 52) are provided of which one (51) is directed onto the front surface of the free end (34) of the foil packet (12) and the second (52) is directed onto the region of the foil packet (12) near the holding jaws (7, 8) and in that the switching device (50) has two switch steps (switch contacts 55, 56) effective in dependence on the temperature at the free end of the foil packet (12) and in dependence on the temperature near the holding jaws (7, 8), the first of which causes a reduction of the welding process (I) whilst the second causes a discontinuance of the welding process (I).

10. Device according to claim 8, characterised in that two infra-red detectors (51, 51a) are provided which are directed onto the front-side corner region of the end (34) of the foil packet (12) to be held between the welding electrodes (36).

## Revendications

1. Procédé pour assembler localement des feuilles métalliques (13) en forme de rubans et empilées en paquet, par soudage électrique avec compression, sur les deux extrémités du paquet de feuilles (12), à l'aide d'électrodes de soudage (36; 73, 74) pour faire passer un courant de soudage (I) à travers la zone à assembler (extrémités 34, 35) du paquet de feuilles (12), ainsi qu'à l'aide d'un dispositif pour l'évacuation de la chaleur hors du paquet de feuilles (12), comprenant les opérations suivantes, effectuées successivement sous l'effet d'une commande séquentielle:

a) réception entre des mâchoires de maintien (7, 8; 70, 71, 72) d'un paquet de feuilles (12) mis à disposition, de manière que les extrémités du paquet (12) dépassent des deux côtés;

b) amenée des mâchoires (7, 8) à une position en attente prévu près des électrodes de soudage (36);

c) amenée des mâchoires (7, 8; 70, 71 ou 70, 72) depuis la position en attente à une position de travail où une extrémité (34) du paquet de feuilles (12) est engagée entre les électrodes de soudage (36);

d) application des électrodes de soudage (36; 73, 74) contre cette extrémité (34) du paquet (12), envoi d'un courant de soudage (I) à travers le paquet de feuilles (12) et application d'un fluide de refroidissement aux mâchoires (7, 8; 70, 71, 72);

e) coupure du courant de soudage (I) et écartement des électrodes de soudage (36; 73, 74);

f) amenée des mâchoires (7, 8; 70, 71 ou 70, 72) de la position de travail à la position en attente;

g) rotation des mâchoires (7, 8; 70, 71 ou 70, 72) pour le positionnement de l'autre extrémité (35) du paquet de feuilles (12) en vue du soudage avec compression; et

h) exécution analogue des opérations c), d), e) et f) pour l'autre extrémité (35) du paquet (12).

2. Procédé selon la revendication 1, caractérisé en ce que, dans le cas d'un mode de travail horizontal des électrodes de soudage (73, 74), le paquet de feuilles (12) est seulement serré chaque fois, entre les mâchoires (70, 71 ou 70, 72), près de l'extrémité (34, 35) à souder.

3. Procédé selon la revendication 1 ou 2, caractérisé en ce qu'un dispositif de commutation (50) est prévu pour varier le courant de soudage (I), dispositif qui est commandé en fonction de la température du point de soudage, et qu'un détecteur à infrarouge (51) est associé au dispositif de commutation (50) pour l'obtention d'un signal de commande fonction de la température.

4. Procédé selon une des revendications 1 à 3, caractérisé en ce que le courant de soudage (I) est un courant continu obtenu dans un dispositif d'alimentation électrique (53) par redressement d'un courant alternatif polyphasé.

5. Dispositif comprenant deux électrodes de soudage (73, 74) déplaçables l'une par rapport à l'autre et recevant entre elles les extrémités (34, 35) du paquet de feuilles (12), pour la mise en œuvre du procédé selon une des revendications 1 à 4, caractérisé en ce qu'il comprend, pour la réception du paquet de feuilles (12) pendant l'opération de soudage, par une partie se raccordant aux extrémités (34, 35) à souder, deux mâchoires de maintien (7, 8; 70, 71, 72) faites d'un matériau bon conducteur thermique, qui sont disposées mobiles l'une par rapport à l'autre et présentent chacune au moins un canal (20, 21) pour le passage d'un milieu de refroidissement, et que les mâchoires (7, 8; 70, 71, 72) possèdent des surfaces de serrage (10, 11) incurvées dans le même sens et conformées pour s'imbriquer mutuellement, qui représentent une forme de substitution pour la configuration du paquet de feuilles fini, soudé, lors de son utilisation (bande conductrice 1).

6. Dispositif selon la revendication 5, caractérisé en ce que l'une au moins des deux mâchoires (7, 8) coopérantes est d'exécution divisée et que les parties de mâchoire (16, 17) sont déplaçables par des moyens de commande séparés.

7. Dispositif selon la revendication 5, caractérisé en ce qu'il comprend une mâchoire intérieure non divisée (70) de courbure convexe et deux mâchoires extérieures (71, 72) qui appliquent le paquet de feuilles (12) contre la mâchoire intérieure (70) et recouvrent chacune seulement la partie du paquet de feuilles (12) se raccordant à l'extrémité (34, 35) à souder du paquet de feuilles (12), et que les mâchoires extérieures (71, 72) sont déplaçables successivement de manière qu'une première mâchoire extérieure (71) soit applicable d'abord contre le paquet (12), qu'à la suite de l'opération de soudage, la deuxième mâchoire extérieure (72) soit applicable contre le paquet (12) et que, ensuite, la première mâchoire extérieure (71) puisse être écartée.

8. Dispositif selon une des revendications 5 à 7, caractérisé en ce que les mâchoires (7, 8) sont mobiles en translation dans le sens vertical et dans le sens horizontal et sont, en outre, disposées basculantes, le trajet de translation s'étendant jusqu'à la zone limite (38) du dispositif (25) pour la réception d'un paquet de feuilles (12) préparé à l'extérieur du dispositif (25) et le trajet de basculement étant conçu pour l'introduction successive des deux extrémités (34, 35) à souder du paquet de feuilles (12) dans la zone de travail des électrodes de soudage (36).

9. Dispositif selon la revendication 8, caractérisé en ce qu'il comprend deux détecteurs à infrarouge (51, 52) dont l'un (51) est dirigé sur la face de tête de l'extrémité libre (34) du paquet de feuilles (12) et le deuxième (52) est dirigé sur la partie du paquet (12) située près des mâchoires (7, 8) et que le dispositif de commutation (50) présente deux paliers (contacts de commutation 55, 56) utilisés en fonction de la température à l'extrémité libre du paquet (12) et en fonction de la température près des mâchoires (7, 8), le premier palier produisant une réduction du processus de soudage (I) et le deuxième produisant l'interruption du processus de soudage (I).

10. Dispositif selon la revendication 8, caractérisé en ce qu'il comprend deux détecteurs à infrarouge (51, 51a) qui sont dirigés sur les zones d'angle de la tête de l'extrémité (34), qui doit être reçue entre les électrodes de soudage (36), du paquet de feuilles (12).

FIG 1

FIG 2

FIG 3

FIG 4

EP 0 233 137 B1

EP 0 233 137 B1

FIG 5

FIG 6

**FIG 7**

**FIG 8**

**FIG 9**